# EUROPÄISCHE PATENTANMELDUNG

(11) **EP 4 254 907 A1**
(43) Veröffentlichungstag der Anmeldung: **04.10.2023**
(21) Anmeldenummer: 22165072.4
(22) Anmeldetag: 29.03.2022
(51) Int. Cl.: H04L 67/12, H04L 47/10, H04L 47/19, H04L 47/30, H04L 47/35

(54) **VERFAHREN UND SYSTEM ZUR EREIGNISGESTEUERTEN ÜBERMITTLUNG VON STEUERUNGSDATEN**

(71) Anmelder: Siemens Aktiengesellschaft, 80333 München (DE)
(72) Erfinder: Raab, Katrin, 90491 Nürnberg (DE); Gerke, Christian, 90402 Nürnberg (DE); Heß, Philipp, 96152 Burghaslach (DE)
(74) Vertreter: Siemens Patent Attorneys

(57) **Zusammenfassung**

Die Erfindung betrifft eine ereignisgesteuerte Übermittlung von Steuerungsdaten innerhalb eines industriellen Automatisierungssystems, bei der ein erstes Kommunikationsgerät (201) bei Vorliegen neuer oder geänderter Informationen diese Informationen umfassende Steuerungsdaten (212) an ein zweites Kommunikationsgerät (202) sendet. Das zweite Kommunikationsgerät speichert die vom ersten Kommunikationsgerät gesendeten Steuerungsdaten zumindest temporär. Vor einem Senden der Steuerungsdaten vergleicht das erste Kommunikationsgerät einen Sendezähler (seq) auf Übereinstimmung mit einem Empfangszähler (ack) und die sendet Steuerungsdaten erst bei einer Übereinstimmung. Bei einem Sendevorgang inkrementiert das erste Kommunikationsgerät den Sendezähler jeweils um einen Zählerwert. Jeweils nach einem abgeschlossenen Empfangsvorgang prüft das zweite Kommunikationsgerät, ob für eine Speicherung von mit einem nachfolgenden Sendevorgang gesendeten Steuerungsdaten ausreichend Speicherplatz in einem Pufferspeicher (220) des zweiten Kommunikationsgeräts verfügbar ist. Das zweite Kommunikationsgerät inkrementiert den Empfangszähler erst dann um einen Zählerwert, wenn nach einem abgeschlossenen Empfangsvorgang ausreichend Speicherplatz für die Speicherung von nachfolgend gesendeten Steuerungsdaten verfügbar ist.

## Beschreibung

Die vorliegende Erfindung betrifft ein Verfahren zur ereignisgesteuerten Übermittlung von Steuerungsdaten, insbesondere von zeitkritischen Steuerungsdaten, innerhalb in eines industriellen Automatisierungssystems sowie ein System, das zur Durchführung des Verfahrens vorgesehen ist.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus EP 3 059 922 A1 ist eine Vorrichtung zum Durchführen eines TCP-Handshakes bekannt, die eine Schnittstelle umfasst, um Nachrichten zwischen mindestens einem externen Gerät und einem Prozessor in der Vorrichtung zu übertragen. Der Prozessor ist dafür vorgesehen, von der Schnittstelle eine SYN-ACK-Nachricht zu empfangen, für die das Gerät keine entsprechende SYN-Nachricht gesendet hat. Dabei umfasst die SYN-ACK-Nachricht eine Quelladresse. Darüber hinaus rekonstruiert der Prozessor den TCP-Handshake, als wenn das Gerät die entsprechende SYN-Nachricht gesendet hätte. Des Weiteren erzeugt der Prozessor eine ACK-Nachricht, die zur SYN-ACK-Nachricht korrespondiert. Schließlich sendet der Prozessor die ACK-Nachricht an die Schnittstelle zur weiteren Übertragung an die Quelladresse.

In US 8 595 477 B1 ist ein Verfahren zum Verringern einer Handshake-Verzögerung in einem Server beschrieben, der mit einem oder mehreren Clients kommuniziert. Am Server wird für jeden Client aus einem Standard-Handshake-Betriebsmodus oder einem optimierten Handshake-Betriebsmodus ein Betriebsmodus ausgewählt. Außerdem ist der Server dafür vorgesehen, von den Clients Verbindungsaufbauanforderungen zu empfangen, die ihrerseits Anforderungen von Inhalten umfassen. Entsprechend dem jeweils ausgewählten Betriebsmodus werden Daten vom Server an die Clients übermittelt. Ist als Betriebsmodus der Standard-Handshake-Betriebsmodus ausgewählt, übermittelt der Server eine Bestätigung der Verbindungsaufbauanforderung. Dagegen übermittelt der Server eine Bestätigung der Verbindungsaufbauanfrage und die angeforderten Inhalte, wenn als Betriebsmodus der optimierte Handshake-Betriebsmodus ausgewählt ist.

In industriellen Automatisierungssystemen wird eine Kommunikation zwischen speicherprogrammierbaren Steuerungen und anderen Systemkomponenten oft durch Tag- oder Topic-basierte Kommunikation, beispielsweise entsprechend OPC UA Pub/Sub, eingeschränkt. Bestehen bei ereignisgesteuert übermittelten Anwendungsdaten hohe Anforderungen an deren Konsistenz, werden üblicherweise Handshake-Prozesse bei einer Client-Server- oder Publisher-Subscriber-Kommunikation genutzt. Derartige Handshake-Prozesse haben sich bisher als komplex und zeitaufwendig erwiesen.

Der vorliegenden Erfindung liegt daher die Aufgabe zugrunde, ein effizient und schnell durchführbares Verfahren zur ereignisgesteuerten Übermittlung von Steuerungsdaten innerhalb eines industriellen Automatisierungssystems anzugeben und ein geeignetes System zu dessen Implementierung zu schaffen.

Diese Aufgabe wird erfindungsgemäß durch ein Verfahren mit den in Patentanspruch 1 angegebenen Merkmalen und durch ein System mit den in Patentanspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur ereignisgesteuerten Übermittlung von Steuerungsdaten innerhalb eines industriellen Automatisierungssystems sendet ein erstes Kommunikationsgerät, insbesondere ein Client, bei Vorliegen neuer oder geänderter Informationen, beispielsweise Mess- bzw. Zustandsgrößen, diese Informationen umfassende Steuerungsdaten an ein zweites Kommunikationsgerät. Das zweite Kommunikationsgerät, beispielweise ein Server, speichert die vom ersten Kommunikationsgerät gesendeten Steuerungsdaten zumindest temporär. Insbesondere kann das erste Kommunikationsgerät die Steuerungsdaten unmittelbar bei Vorliegen neuer oder geänderter Informationen oder bei Änderung des Empfangszählers auf einen erwarteten Zählerwert an das zweites Kommunikationsgerät senden. Darüber hinaus können die Sendevorgänge des ersten Kommunikationsgeräts unabhängig von einem Übermittlungszyklus sein. Vorzugsweise werden die Steuerungsdaten entsprechend einem Anwendungs- oder Maschine-zu-Maschine-Kommunikationsprotokoll, wie OPC UA, MQTT oder XMPP, bzw. Topic- oder Tag-basiert übermittelt.

Das erste Kommunikationsgerät vergleicht vor einem Senden der Steuerungsdaten erfindungsgemäß einen Sendezähler auf Übereinstimmung mit einem Empfangszähler und sendet die Steuerungsdaten erst bei einer Übereinstimmung. Außerdem inkrementiert das erste Kommunikationsgerät den Sendezähler jeweils bei einem Sendevorgang um einen Zählerwert. Demgegenüber prüft das zweite Kommunikationsgerät jeweils nach einem abgeschlossenen Empfangsvorgang, ob für eine Speicherung von mit einem nachfolgenden Sendevorgang gesendeten Steuerungsdaten ausreichend Speicherplatz in einem Pufferspeicher des zweiten Kommunikationsgeräts verfügbar ist. Ein Empfangsvorgang wird insbesondere dann abgeschlossen, wenn während eines Sendevorgangs durch das erste Kommunikationsgerät gesendete Steuerungsdaten vollständig bzw. fehlerfrei in den Pufferspeicher des zweiten Kommunikationsgeräts geschrieben werden.

Das zweite Kommunikationsgerät inkrementiert den Empfangszähler erfindungsgemäß erst dann um einen Zählerwert, wenn nach einem abgeschlossenen Empfangsvorgang ausreichend Speicherplatz für die Speicherung von nachfolgend gesendeten Steuerungsdaten verfügbar ist. Im Vergleich zu bisherigen Handshake-Konzepten ermöglicht die vorliegende Erfindung eine vereinfachte Kommunikation zwischen Kommunikationsteilnehmern, wodurch Wartezeiten deutlich verkürzt werden und eine Auslastung von Netzwerk-Ressourcen reduziert wird. Insbesondere ist nach einer Bestätigung eines abgeschlossenen Empfangsvorgangs keine zusätzliche senderseitige Anfrage einer empfängerseitigen Einräumung eines Schreibzugriffs erforderlich.

Entsprechend einer bevorzugten Ausgestaltung der vorliegenden Erfindung sendet das erste Kommunikationsgerät nach jedem abgeschlossenen Sendevorgang jeweils einen aktuellen Zählerwert des Sendezählers mit den jeweiligen Steuerungsdaten an das zweite Kommunikationsgerät. Damit kann das zweite Kommunikationsgerät den Zählerwert des Empfangszählers anhand des vom ersten Kommunikationsgerät gesendeten Zählerwerts des Sendezählers synchronisieren. Insbesondere ist der durch das zweite Kommunikationsgerät bei einem abgeschlossenen Empfangsvorgang sowie ausreichend Speicherplatz gesendete Zählerwert des Empfangszählers identisch mit dem beim Sendevorgang jeweils zuvor durch das erste Kommunikationsgerät gesendeten Zählerwert des Sendezählers.

Darüber hinaus sendet das zweite Kommunikationsgerät vorteilhafterweise jeweils einen aktuellen Zählerwert des Empfangszählers mit einer jeweiligen Bestätigungsmeldung über einen abgeschlossenen Empfangsvorgang sowie ausreichend Speicherplatz an das erste Kommunikationsgerät. Auf diese Weise kann das erste Kommunikationsgerät den Sendezähler schnell und zuverlässig auf Übereinstimmung mit dem Empfangszähler vergleichen.

Das erfindungsgemäße System ist zur Durchführung eines Verfahrens entsprechend vorangehenden Ausführungen vorgesehen und umfasst zumindest ein erstes Kommunikationsgerät sowie ein zweites Kommunikationsgerät. Dabei ist das erste Kommunikationsgerät dafür ausgestaltet und eingerichtet, bei Vorliegen neuer oder geänderter Informationen diese Informationen umfassende Steuerungsdaten an das zweite Kommunikationsgerät zu senden. Das zweite Kommunikationsgerät ist dagegen dafür ausgestaltet und eingerichtet, die vom ersten Kommunikationsgerät gesendeten Steuerungsdaten zumindest temporär zu speichern.

Darüber hinaus ist das erste Kommunikationsgerät des erfindungsgemäßen Systems zusätzlich dafür ausgestaltet und eingerichtet, vor einem Senden der Steuerungsdaten einen Sendezähler auf Übereinstimmung mit einem Empfangszähler zu vergleichen und die Steuerungsdaten erst bei einer Übereinstimmung zu senden. Zusätzlich ist das erste Kommunikationsgerät dafür ausgestaltet und eingerichtet, den Sendezähler jeweils bei einem Sendevorgang um einen Zählerwert zu inkrementieren.

Das zweite Kommunikationsgerät des erfindungsgemäßen Systems ist zusätzlich dafür ausgestaltet und eingerichtet, jeweils nach einem abgeschlossenen Empfangsvorgang zu prüfen, ob für eine Speicherung von mit einem nachfolgenden Sendevorgang gesendeten Steuerungsdaten ausreichend Speicherplatz in einem Pufferspeicher des zweiten Kommunikationsgeräts verfügbar ist. Des Weiteren ist das zweite Kommunikationsgerät zusätzlich dafür ausgestaltet und eingerichtet, den Empfangszähler erst dann um einen Zählerwert zu inkrementieren, wenn nach einem abgeschlossenen Empfangsvorgang ausreichend Speicherplatz für die Speicherung von nachfolgend gesendeten Steuerungsdaten verfügbar ist.

Die vorliegende Erfindung wird nachfolgend an einem Ausführungsbeispiel anhand der Zeichnung näher erläutert. Es zeigt
- Figur 1: eine Darstellung eines Ablaufs eines bisherigen Handshake-Verfahrens für zwischen Kommunikationsgeräten innerhalb eines industriellen Automatisierungssystem ausgetauschte Steuerungsdaten,
- Figur 2: eine Darstellung eines Ablaufs eines verbesserten Handshake-Verfahrens.

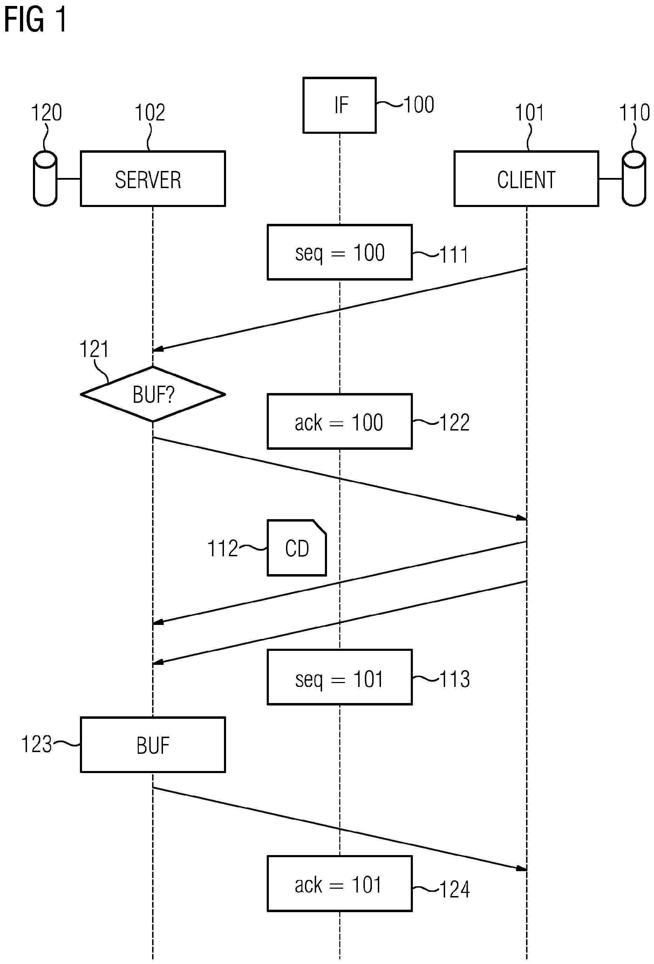

Das in Figur 1 dargestellte Verfahren zur ereignisgesteuerten Übermittlung von Steuerungsdaten innerhalb eines industriellen Automatisierungssystems, das in "Konsistente nachrichtenbasierte Kommunikation via OPC UA" (https://support.industry. siemens.com/cs/ww/de/view/109795979) beschrieben ist, dient dazu, dass ein erstes Kommunikationsgerät 101, insbesondere ein Client, bei Vorliegen neuer oder geänderter Mess- bzw. Zustandsgrößen die Mess- bzw. Zustandsgrößen umfassende Steuerungsdaten an ein zweites Kommunikationsgerät 102, insbesondere an einen Server, senden kann.

Der Server 102 speichert die vom Client 101 gesendeten Steuerungsdaten in einem als Ringpuffer ausgestalteten Nachrichtenpuffer 120. Auf diese Weise schreibt der Client 101 die Steuerungsdaten entsprechend einem Maschine-zu-Maschine-Kommunikationsprotokoll, insbesondere OPC UA, in den Nachrichtenpuffer 120 des Servers 102. Der Nachrichtenpuffer 120 dient dazu, eine Anzahl von Nachrichten eines bestimmten benutzerdefinierten Nachrichtentyps zu speichern. Dabei wird der Nachrichtenpuffer 120 mittels einer Zeigerstruktur verwaltet. Hierdurch wird insbesondere eine Überlastung des Nachrichtenpuffer 120 vermieden. Für vom Server 102 gesendete Steuerungsdaten weist der Client 101 ebenfalls einen Nachrichtenpuffer 110 auf.

Der Server 102 kann beispielsweise eine speicherprogrammierbare Steuerung sein. Speicherprogrammierbare Steuerungen umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung und einer durch die speicherprogrammierbare Steuerung gesteuerten Maschine oder Vorrichtung 210. Die Zentraleinheit ist insbesondere für eine Ermittlung geeigneter Steuerungsgrößen aus erfassten Messgrößen vorgesehen.

Der Client 101 kann beispielsweise eine Bedien- und Beobachtungsstation sein. Eine Bedien- und Beobachtungsstation dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Zur Nachrichtenübermittlung entsprechend OPC UA benötigt jeder Kommunikationspartner 101, 102 bei dem in Figur 1 dargestellten Beispiel eine Nachrichtenschnittstelle 100 für benutzerdefinierte Nachrichten mit statischer Knotenadresse. Hierdurch kann ein Kommunikationspartner eine Nachricht abrufen und lesen. Außerdem ist eine generische Handshake-Schnittstelle vorgesehen, anhand der die Kommunikationspartner 101, 102 einen aktuellen Status einer Nachrichtenverarbeitung ermitteln und darauf reagieren können. Die Handshake-Schnittstelle umfasst ein Signalisieren einer Lese- oder Schreibabsicht mittels einer laufenden Sequenznummer (seq) und ein Signalisieren eines Quittierens eines Lese- oder Schreibvorgangs mittels einer korrespondieren Quittiernummer (ack) .

Entsprechend dem in Figur 1 dargestellten Beispiel ruft der Server 102 zyklisch eine Abwicklungsfunktion für kommende Nachrichten auf und kann so erkennen, wenn sich die laufende Sequenznummer (seq) in der Handshake- Schnittstelle ändert. Eine die Sequenznummer (seq) umfassende Nachricht 111 des Clients 101 signalisiert dementsprechend, dass der Client 101 eine Nachricht mit Steuerungsdaten senden möchte und eine Bestätigung benötigt, um in die Nachrichtenschnittstelle 100 zu schreiben. Außerdem prüft die Abwicklungsfunktion entsprechend Schritt 121, ob freier Platz im Nachrichtenpuffer 120 des Servers 102 verfügbar ist. Wenn das der Fall ist, wird die Quittiernummer (ack) auf die Sequenznummer (seq) gesetzt und dem Client 101 mittels einer entsprechenden Nachricht 122 signalisiert, dass er Steuerungsdaten in die Nachrichtenschnittstelle 100 schreiben kann.

Nachdem der Client 101 seine Nachricht 112 mit den Steuerungsdaten in die Nachrichtenschnittstelle 100 geschrieben hat, erhöht er die Sequenznummer (seq) um einen Zählerwert und signalisiert dies mittels einer entsprechenden Nachricht 113. Hierdurch erkennt der Server 102, dass ein Schreibvorgang in die Nachrichtenschnittstelle 100 abgeschlossen ist und die Nachricht 112 des Clients 101 in den Nachrichtenpuffer 120 des Servers 102 geschrieben werden kann. Nachdem der Server 102 die Nachricht 112 des Clients 101 aus der Nachrichtenschnittstelle 100 abgerufen und entsprechend Schritt 123 in seinen Nachrichtenpuffer 120 geschrieben hat, setzt der Server 102 die Quittiernummer (ack) auf die Sequenznummer (seq) und signalisiert dies dem Client 101 mittels einer entsprechenden Nachricht 124. Solange die Sequenznummer (seq) nicht gleich der Quittiernummer (ack) ist, darf der Client 101 weder Steuerungsdaten schreiben bzw. senden noch eine Erlaubnis zum Senden einer neuen Nachricht anfordern.

Gegenüber dem in Figur 1 dargestellten Beispiel weist das Ausführungsbeispiel entsprechend Figur 1 einen vereinfachten und weniger zeitaufwendigen Handshake-Prozess zum Schreiben bzw. Senden von Steuerungsdaten auf. Obige Ausführungen gelten ansonsten sinngemäß. Insbesondere sendet der Client 201 als erstes Kommunikations- bzw. Automatisierungsgerät ereignisgesteuert bei Vorliegen neuer oder geänderter Mess- bzw. Zustandsgrößen diese Mess- bzw. Zustandsgrößen umfassende Steuerungsdaten an den Server 202 als zweites Kommunikations- bzw. Automatisierungsgerät. Dementsprechend speichert der Server 202 die vom Client 201 gesendeten Steuerungsdaten.

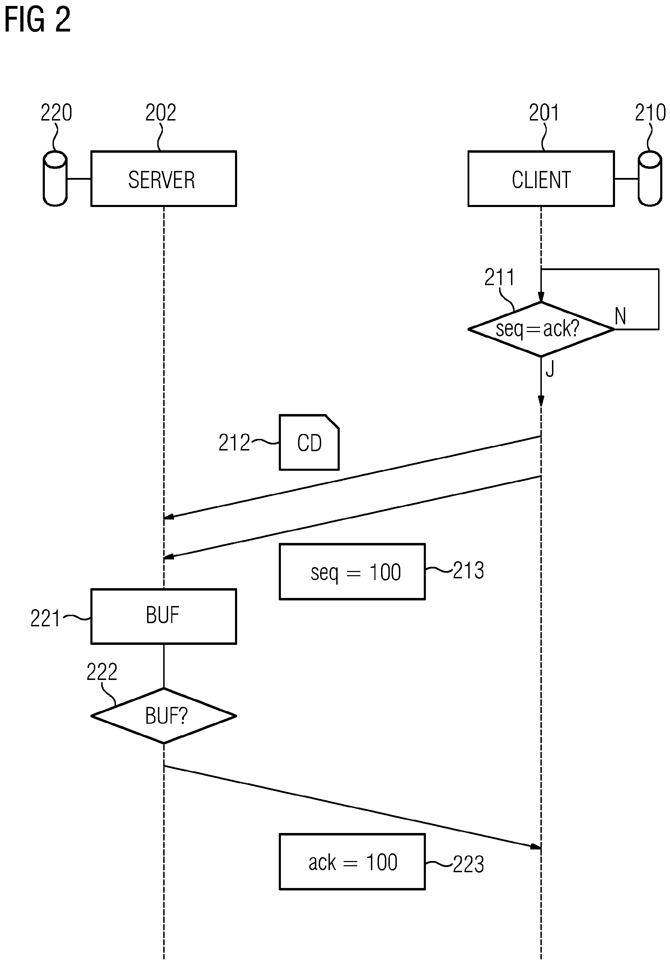

Vorzugsweise werden die Steuerungsdaten bei dem in Figur 2 dargestellten Ausführungsbeispiel entsprechend einem Anwendungs- oder Maschine-zu-Maschine-Kommunikationsprotokoll, wie OPC UA, MQTT oder XMPP, bzw. Topic- oder Tag-basiert übermittelt. Insbesondere sendet der Client 202 die Steuerungsdaten unmittelbar bei Vorliegen neuer oder geänderter Mess- bzw. Zustandsgrößen oder bei Änderung des Empfangszählers auf einen erwarteten Zählerwert an den Server zweites Kommunikationsgerät. Dabei sind Schreib- bzw. Sendevorgänge des Clients 201 grundsätzlich von keinem Übermittlungszyklus abhängig.

Entsprechend Schritt 211 des in Figur 2 dargestellten Ablaufs vergleicht der Client 202 vor einem Schreiben bzw. Senden der Steuerungsdaten einen Sendezähler (seq) auf Übereinstimmung mit einem Empfangszähler (ack) und sendet die Steuerungsdaten 212 erst bei einer Übereinstimmung. Bei jedem abgeschlossenen Schreib bzw. Sendevorgang inkrementiert der Client 201 den Sendezähler (seq) jeweils um einen Zählerwert. Insbesondere sendet der Client 201 nach jedem abgeschlossenen Schreib- bzw. Sendevorgang jeweils einen aktuellen Zählerwert des Sendezählers (seq) im Anschluss an die jeweiligen Steuerungsdaten mittels einer entsprechenden Nachricht 213 an den Server 202. Anhand des vom Client 201 gesendeten Zählerwerts des Sendezählers (seq) synchronisiert der Server 202 einen Zählerwert des Empfangszählers (ack).

Der Server 202 speichert die vom Client 201 geschriebenen bzw. gesendeten Steuerungsdaten entsprechend Schritt 221 des in Figur 2 dargestellten Ablaufs in einem Pufferspeicher 220 des Servers 202. Analog dazu umfasst auch der Client 201 einen Pufferspeicher 210 für durch den Server 202 gesendete Steuerungsdaten. Jeweils nach einem abgeschlossenen Empfangsvorgang prüft der Server 202 entsprechend Schritt 222, ob für eine Speicherung von mit einem nachfolgenden Schreib- bzw. Sendevorgang gesendeten Steuerungsdaten ausreichend Speicherplatz im Pufferspeicher 220 des zweiten Kommunikationsgeräts verfügbar ist. Ein Empfangsvorgang wird insbesondere dann abgeschlossen, wenn während eines Schreib- bzw. Sendevorgangs durch den Client 201 geschriebene bzw. gesendete Steuerungsdaten vollständig bzw. fehlerfrei in den Pufferspeicher 220 des Servers 202 geschrieben werden.

Der Server 202 inkrementiert den Empfangszähler (ack) erst dann um einen Zählerwert, wenn nach einem abgeschlossenen Empfangsvorgang ausreichend Speicherplatz für die Speicherung von nachfolgend geschriebenen bzw. gesendeten Steuerungsdaten verfügbar ist. Dabei sendet der Server 202 jeweils einen aktuellen Zählerwert des Empfangszählers (ack) mit einer jeweiligen Bestätigungsmeldung 223 über einen abgeschlossenen Empfangsvorgang sowie ausreichend Speicherplatz an den Client 201. Bei einem abgeschlossenen Empfangsvorgang sowie ausreichend Speicherplatz ist der gesendete Zählerwert des Empfangszählers (ack) identisch mit dem beim Schreib- bzw. Sendevorgang jeweils zuvor durch den Client 201 gesendeten Zählerwert des Sendezählers (seq). Auf dieser Grundlage kann der Client 201 für einen neuen Schreib- bzw. Sendevorgang wieder entsprechend Schritt 211 des in Figur 2 dargestellten Ablaufs den Sendezähler (seq) auf Übereinstimmung mit dem Empfangszähler (ack) vergleichen.

## Patentansprüche

1. Verfahren zur ereignisgesteuerten Übermittlung von Steuerungsdaten innerhalb eines industriellen Automatisierungssystems, bei dem
- ein erstes Kommunikationsgerät (201) bei Vorliegen neuer oder geänderter Informationen diese Informationen umfassende Steuerungsdaten (212) an ein zweites Kommunikationsgerät (202) sendet,
- das zweite Kommunikationsgerät die vom ersten Kommunikationsgerät gesendeten Steuerungsdaten zumindest temporär speichert,
- das erste Kommunikationsgerät vor einem Senden der Steuerungsdaten einen Sendezähler (seq) auf Übereinstimmung mit einem Empfangszähler (ack) vergleicht und die Steuerungsdaten erst bei einer Übereinstimmung sendet,
- das erste Kommunikationsgerät den Sendezähler jeweils bei einem Sendevorgang um einen Zählerwert inkrementiert,
- das zweite Kommunikationsgerät jeweils nach einem abgeschlossenen Empfangsvorgang prüft, ob für eine Speicherung von mit einem nachfolgenden Sendevorgang gesendeten Steuerungsdaten ausreichend Speicherplatz in einem Pufferspeicher (220) des zweiten Kommunikationsgeräts verfügbar ist,
- das zweite Kommunikationsgerät den Empfangszähler erst dann um einen Zählerwert inkrementiert, wenn nach einem abgeschlossenen Empfangsvorgang ausreichend Speicherplatz für die Speicherung von nachfolgend gesendeten Steuerungsdaten verfügbar ist.

2. Verfahren nach Anspruch 1,
bei dem das erste Kommunikationsgerät nach jedem abgeschlossenen Sendevorgang jeweils einen aktuellen Zählerwert des Sendezählers mit den jeweiligen Steuerungsdaten an das zweite Kommunikationsgerät sendet.

3. Verfahren nach Anspruch 2,
bei dem das zweite Kommunikationsgerät den Zählerwert des Empfangszählers anhand des vom ersten Kommunikationsgerät gesendeten Zählerwerts des Sendezählers synchronisiert.

4. Verfahren nach einem der Ansprüche 2 oder 3,
bei dem das zweite Kommunikationsgerät jeweils einen aktuellen Zählerwert des Empfangszählers mit einer jeweiligen Bestätigungsmeldung über einen abgeschlossenen Empfangsvorgang sowie ausreichend Speicherplatz an das erste Kommunikationsgerät sendet.

5. Verfahren nach Anspruch 4,
bei dem der durch das zweite Kommunikationsgerät bei einem abgeschlossenen Empfangsvorgang sowie ausreichend Speicherplatz gesendete Zählerwert des Empfangszählers identisch ist mit dem beim Sendevorgang jeweils zuvor durch das erste Kommunikationsgerät gesendeten Zählerwert des Sendezählers.

6. Verfahren nach einem der Ansprüche 1 bis 5,
bei dem ein Empfangsvorgang abgeschlossen wird, wenn während eines Sendevorgangs durch das erste Kommunikationsgerät gesendete Steuerungsdaten vollständig und/oder fehlerfrei in den Pufferspeicher des zweiten Kommunikationsgeräts geschrieben werden.

7. Verfahren nach einem der Ansprüche 1 bis 6,
bei dem das erste Kommunikationsgerät die Steuerungsdaten unmittelbar bei Vorliegen neuer oder geänderter Informationen oder bei Änderung des Empfangszählers auf einen erwarteten Zählerwert an das zweites Kommunikationsgerät sendet.

8. Verfahren nach Anspruch 7,
bei dem die Sendevorgänge des ersten Kommunikationsgeräts von keinem Übermittlungszyklus abhängig sind.

9. Verfahren nach einem der Ansprüche 1 bis 8,
bei dem die Steuerungsdaten entsprechend einem Anwendungs- oder Maschine-zu-Maschine-Kommunikationsprotokoll, insbesondere OPC UA, MQTT oder XMPP, und/oder Topic- oder Tag-basiert übermittelt werden.

10. System zur Durchführung eines Verfahrens nach einem der Ansprüche 1 bis 9, bei dem
- das System zumindest ein erstes Kommunikationsgerät (201) und ein zweites Kommunikationsgerät (202) umfasst,
- das erste Kommunikationsgerät dafür ausgestaltet und eingerichtet ist, bei Vorliegen neuer oder geänderter Informationen diese Informationen umfassende Steuerungsdaten (212) an das zweite Kommunikationsgerät zu senden,
- das zweite Kommunikationsgerät dafür ausgestaltet und eingerichtet ist, die vom ersten Kommunikationsgerät gesendeten Steuerungsdaten zumindest temporär zu speichern,
- das erste Kommunikationsgerät zusätzlich dafür ausgestaltet und eingerichtet ist, vor einem Senden der Steuerungsdaten einen Sendezähler auf Übereinstimmung mit einem Empfangszähler zu vergleichen und die Steuerungsdaten erst bei einer Übereinstimmung zu senden,
- das erste Kommunikationsgerät zusätzlich dafür ausgestaltet und eingerichtet ist, den Sendezähler jeweils bei einem Sendevorgang um einen Zählerwert zu inkrementieren,
- das zweite Kommunikationsgerät zusätzlich dafür ausgestaltet und eingerichtet ist, jeweils nach einem abgeschlossenen Empfangsvorgang zu prüfen, ob für eine Speicherung von mit einem nachfolgenden Sendevorgang gesendeten Steuerungsdaten ausreichend Speicherplatz in einem Pufferspeicher (220) des zweiten Kommunikationsgeräts verfügbar ist,
- das zweite Kommunikationsgerät zusätzlich dafür ausgestaltet und eingerichtet ist, den Empfangszähler erst dann um einen Zählerwert zu inkrementieren, wenn nach einem abgeschlossenen Empfangsvorgang ausreichend Speicherplatz für die Speicherung von nachfolgend gesendeten Steuerungsdaten verfügbar ist.
